# EUROPEAN PATENT APPLICATION

(11) **EP 3 015 146 A1**
(43) Date of publication of application: **04.05.2016**
(21) Application number: 14306722.1
(22) Date of filing: 28.10.2014
(51) Int. Cl.: A63H 27/00, G05D 1/00, H04N 5/232

(54) **Method for generating a target trajectory of a camera embarked on a drone and corresponding system**

(71) Applicant: Thomson Licensing, 92130 Issy-les-Moulineaux (FR)
(72) Inventor: Tariolle, François-Louis, 35576 Cesson Sevigne (FR); Mollet, Nicolas, 35576 Cesson Sevigne (FR); Fleureau, Julien, 35576 Cesson Sevigne (FR)
(74) Representative: Huchet, Anne

(57) **Abstract**

For generating a target trajectory of a drone equipped with a vehicle, the drone moving in an indoor or outdoor environment, the method comprises acquiring (S1) an approximate trajectory of the target trajectory by moving manually an object in the environment and capturing the movement of the object; identifying (S2), in the approximate trajectory, at least one trajectory segment corresponding substantially to at least one predefined camera movement pattern; and replacing (S3) the at least one trajectory segment by the at least one predefined camera movement pattern in order to get the target trajectory. The manual acquisition of a first trajectory which is an approximate trajectory of the target trajectory in the real environment allows taking into account obstacles in the real environment without having to describe these obstacles in software to prepare the shoot.

## Description

### 1. Technical Field

The present disclosure relates generally to the field of the generation of a trajectory for a camera embarked on a drone for video making.

### 2. Background Art

With the development of robotics and aeronautics, drones (also known as Unmanned Aerial Vehicle) are now more and more integrated and easy to control, even in non-military context. Many applications making use of such devices may be now found in the civil life as, for instance, surveillance, video recording or even gaming.

Several kinds of drones exist including: fixed-wing drones (plane-like), rotary-wing drones (helicopter-like) and flapping-wing drones (hummingbird-like). Due to the good trade-off between the payload, control and price that they offer, rotary-wing drones are the most developed drones on the civil market. For instance, some rotary-wing drones being controllable from a remote tablet are now available for sale to non-professional consumers. Such kinds of drones are able to embed a video camera and broadcast the data over a wireless network.

However, despite the new possibilities offered by such kind of drone to ease its control, one trained human is often still required to pilot the drone as well as another person to control the embedded camera in case of simultaneous video-recording. In addition, controlling the drone in terms of position, speed and acceleration as well as in terms of orientation in a very accurate way may be not possible, even for a well-trained pilot. Such level of control may be especially required when a drone is navigating close to moving persons, or in interior conditions with a lot of tridimensional obstacles.

Looking at professional equipment able to reproduce the same movement for video acquisition, we can cite for example the solution from the company Louma Systems. It consists in a robotic crane handling a camera. The movements may be designed in advance, and then replayed precisely by the systems, which provide a precise real-time localization of the camera thanks to the mechanical chain of the arm and the internal controllers. The trajectory may also be generated by recording the sequence of manual controls on this crane, i.e. by recording the sequence of positions of all the controllers.

Thus the trajectory of the arm can be designed off-line. But the quality of the arm trajectory is here also directly dependent on the manipulation skills of the guy moving the Louma Systems arm. It also requires a trained or a professional user.

In the case of a drone with an embedded camera, the off-line (in advance) definition of the drone trajectory and the camera movements are even more complex than for a Louma Systems arm since the movements of the camera is independent from the drone trajectory . It requires for the user:
- strong 3D modeling background and knowledge to design curved and linear segments of a trajectory,
- skills in manipulating, reasoning and imagining in 3D,
- ad equation/matching with the real environment: for instance, in a room, the trajectory must be defined such that the drone does not meet fixed obstacles, ceiling, and walls in the room; positions and scales of each object need to be measured in the real world towards an origin and reported in the 3D virtual world.

If the trajectory is defined by demonstration (through a record of the drone path manipulated by the user), it then requires the skills to use the drone and the associated camera (point of view, movements, speed, softness, etc.), in addition to the same 3D skills for editing.

As a consequence, to shoot a movie sequence with a drone equipped with a video camera, and with the emergence of "prosumers" that produce User-Generated Contents (UGC), a need for smooth and professional-like trajectories is rising. Camera movement vocabulary becomes familiar to those new customers (such as a "tracking shot" for instance) and they would want to shoot using those professional techniques.

It would hence be desirable to provide a method capable of generating a trajectory of a camera embarked on a drone without requiring skills and knowledge in 3D modeling.

It would also be desirable to provide such a method capable of generating a trajectory of such a camera in an environment comprising a lot of obstacles, like indoor environment.

### 3. Summary

The disclosure concerns a method for generating a target trajectory of a camera embarked on a drone moving in an indoor or outdoor environment, said method comprising the steps of:
- acquiring an approximate trajectory of the target trajectory by moving, manually or not, an object in said environment and capturing the movement of said object,
- identifying, in said approximate trajectory, at least one trajectory segment corresponding substantially to at least one predefined camera movement pattern, and
- replacing said at least one trajectory segment by said at least one predefined camera movement pattern in order to get the target trajectory.

A first trajectory is captured by moving an object acting as a pseudo-camera. The manual acquisition of this first trajectory which is an approximate trajectory of the target trajectory in the real environment allows taking into account obstacles in said environment (walls, ceiling, objects, furniture...) without having to describe these obstacles in software to prepare the shoot.

If the camera is fixed on the drone, the target trajectory of the camera is equivalent to the trajectory of the drone. If the camera has at least one degree of freedom (position and/or orientation) with respect to the drone, the target trajectory is the trajectory resulting from the movement of the drone and the movement of the camera with respect to the drone.

According to a particular embodiment, the predefined camera movement is part of a collection of predefined camera movement patterns used in film making industry. These predefined camera movement patterns are for example tracking shots, panoramic movements, tilt, pan ...

So this method gives to prosumers a simple way to produce user-generated contents with aerial shooting with professional camera movements, much better than with real-time commands.

This method also allows generating complex trajectory by method with a few numbers of steps, based on a manual acquisition in a real environment refined by automatic post processing to obtain a professional result worthy of movie director.

In a particular embodiment, the identifying step is automatic.

In a particular embodiment, the approximate trajectory comprises a plurality of sample points, each sample point being characterized by a 3D position, an orientation and a time stamp.

In a particular embodiment, the movement of the object is captured by a tracking system arranged for tracking the 3D position and the orientation of the object when moved in said environment and for generating a 3D position, an orientation and a time stamp for each sample point of the approximate trajectory.

Advantageously, the method further comprises a step for modifying the timestamp and/or the 3D position and/or the orientation of at least one sample point of the approximate trajectory or the target trajectory.

Advantageously, the method further comprises a step for adding and/or deleting at least one sample points to and/or from the approximate trajectory and/or target trajectory. It allows completing the trajectory by additional segments that can be picked up in the collection of predefined camera movements.

The disclosure concerns also a system for generating a target trajectory of a camera embarked on a drone moving in an indoor or outdoor environment, characterized in that said system comprises:
- a unit for acquiring an approximate trajectory of the target trajectory by moving, manually or not, an object in said environment and capturing the movement of said object, and
- a unit for identifying, in said approximate trajectory, at least one trajectory segment corresponding substantially to at least one predefined camera movement pattern, and for replacing said at least one trajectory segment by said at least one predefined camera movement pattern in order to get the target trajectory.

While not explicitly described, the present embodiments may be employed in any combination or sub-combination.

### 4. Brief description of the drawings

The disclosure can be better understood with reference to the following description and drawings, given by way of example and not limiting the scope of protection, and in which:
- Figure 1 is a flow chart of the successive steps implemented when performing the method according to an embodiment of the disclosure; and
- Figure 2 is a schematic view of the global architecture of a trajectory generation system according to one embodiment.

### 5. Description of embodiments

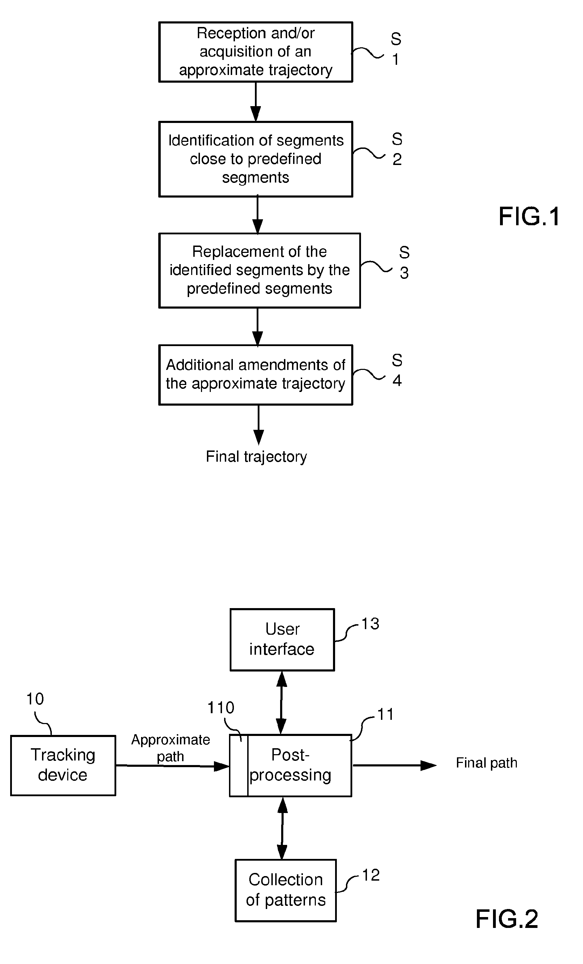

The present disclosure relates to methods and systems for generating a trajectory for a camera embarked on a drone moving in an indoor or outdoor environment. Many specific details of certain embodiments of the disclosure are set forth in the following description and in figures 1 to 2 to provide a thorough understanding of such embodiments. One skilled in the art, however, will understand that the present disclosure may have additional embodiments, or that the present disclosure may be practiced without several of the details described in the following description.

The disclosure will be described in the case of an indoor environment which is the most difficult case due to the presence of numerous obstacles (walls, objects, furniture...). More specifically, the disclosure will be described through the example of the owner who wants to shoot a video tour of the rooms of his museum castle. This application will help explaining the inventive method and will show the advantages of the present disclosure for such a complex and tedious work.

The owner of the castle wants to shoot a video tour of all the rooms of the castle in a single shot i.e. a unique continuous sequence, by using a light drone equipped with a camera. Of course, this example can be transposed to any user who wants to make his own movie at home or in a particular place. It also can be applied by a real estate agent who wants to make a video of a house to be sold in order to put it on the website of his agency. This example is supporting any use-case where the goal is to shoot in a simple way a video with complex but smart and smooth trajectories.

The castle has several floors accessible by stairs. Some interesting masterpieces must be valorized through this video. Advantageously, nobody nor mobile objects will be present or move inside the castle during the trajectory acquisition and during the video capture. Let's call the director, the person who will use our method to shoot this sequence.

The steps of the inventive method are listed in the flow chart of Figure 1.

### Step S1: manual acquisition of an approximate trajectory

At the first step, the director walks across the castle and simulates the camera movements as if he is really shooting with a real camera. The movements of the pseudo-camera are tracked by a tracking localization system. Advantageously, the director uses a real light-camera to embody the pseudo-camera for ergonomic reasons. He can also use the drone equipped with the camera that will capture the final video.

Before the director starts walking, he needs to switch on the tracking localization system that allows for acquisition at high frame rate of every single movement of the pseudo-camera, namely its position and its orientation.

There is a great variety of tracking systems that can be used for this first acquisition. For example, such a tracking system can be:
- Optical systems, like those marketed by OptiTrack or Vicon, comprising optical cameras and reflective markers;
- Kinect devices;
- Inertial Measurement Units (IMU); or
- Communicating distance sensors like Ultra-High Wide band anchors.

Each tracking localization system which is able to provide the position and the orientation of the pseudo-camera during its moving across the castle may be used.

For this step, the director has to deploy the tracking system. In the case of an Ultra-High band system, the director spreads anchors all around the outdoor walls of the castle and sticks anchors on the pseudo-camera which is the tracked object. In the same manner, in the case of an optical system, he should place optical cameras all around the castle and sticks reflective markers on the pseudo-camera.

A computer can act as a server to get every anchor measurement and compute position and orientation of the pseudo-camera at high frame rate (100 Hz for instance) allowing to store each sample in a unique file on the computer disk. Each sample consists of:
- a timestamp associated to an acquisition clock,
- a 3D position (x, y, z) relative to the origin - point of reference known as (0, 0, 0) - pointed by the director, and
- a quaternion (x, y, z, w) to reflect the orientation of the tracked object around the 3D position.

As a complement, VRPN (Virtual Reality Peripheral Network) is often used as a protocol to exchange those kinds of data between Virtual Reality devices on a network (http://www.cs.unc.edu/Research/vrpn/).

Data stored in the resulting file represents the initial trajectory plan of the camera embarked on the drone, plus the knowledge on the speed of the movements as every frame provides a timestamp.

So, the director walks all across the rooms of the castle, stringing together a combination of approximate tracking shots, panoramics and so on, from rooms to rooms, from masterpiece to masterpiece, from floors to floors.

It is not hard to imagine the director may shake the camera by walking or going upstairs. He may also perform a bad circling around a statue. He may not walk perfectly straightforward, without following a perfect invisible line. He may use too much time to shoot a given painting, and not enough time for another one. All these deviations from the desired trajectory plan will be corrected in a second time in the following steps.

When the whole castle has been visited, the director stops the acquisition process of this first trajectory or trajectory plan.

At the end of the process, the director wants to have a final continuous shot. But it does not prevent from recording the initial trajectory in several times, including deleting and restarting some trajectory acquisition sequences, and concatenating different recorded sequences to build the initial trajectory. So before the following step, there could be an intermediate step to merge several small sequences dealing with position boundaries and recomputing timestamps of subsequent sequences. The resulting initial trajectory is stored in an electronic file.

According to a variant, the step S1 is optional. According to this variant, the unit processing the trajectory receives information representative of the approximate trajectory for further processing. The information representative of the approximate trajectory is for example received via any wired or wireless interface.

### Step S2: automatic post-processing to identify trajectory segments matching predefined trajectory movie patterns and application

In this step, the initial trajectory is analysed in order to determine if it includes some trajectory segments corresponding to predefined camera movement patterns used in movies.

The following steps take mainly advantage of a collection of predefined camera movement patterns used in movies in order to improve the initial trajectory. Examples of predefined camera movement patterns are given hereinafter. They are listed using a vocabulary well-known by directors and cameramen. These patterns are configurable by parameters (angle, motion direction...). The predefined camera movement patterns are for example:
- Tracking shot: linear, circle-arc (in degrees), circle (CW "clockwise" or CCW "counter-clockwise"), helix (CW or CCW, top to bottom, or bottom to up with an interleaved height); for these tracking shots, the camera pan and tilt are kept constants and the camera translates on this geometric shape with specific pan/tilt angles and a given direction;
- Panoramic: the camera spins on itself (in degrees +/- and with shortcuts: 90° clockwise, 360°counter-clockwise, etc...);
- Crane: the camera elevates up or down;
- Steady (no move at all).

At this second step, the director will trigger an algorithm that:
1) opens the electronic file acquired in step S1;
2) identifies automatically in the collection of patterns, a pattern that matches a continuous part or segment of the initial trajectory;
3) advantageously checks that the selected pattern is aerodynamically compatible with the capacities of the drone; such a step could be performed by making use of a virtual environment simulating the aerodynamics of the drone; a basic algorithm consists in replaying the current trajectory in a virtual environment and, in the case of a too big error of navigation, the current trajectory is automatically adapted, for example by decrease of the speeds and/or the accelerations or by reducing of the trajectory curvature;
4) if a matching is found, this part is automatically marked for replacement;

This algorithm is repeated until it does no more find parts of the initial trajectory matching with patterns of the collection.

In a more elaborated embodiment, when a pattern is found for a part of the initial part, the algorithm can continue to find a better pattern for this part of the initial trajectory. It computes and stores a quality indicator for each found pattern in order to help the user choosing a pattern at the end of this post-processing.

### Step S3 Replacement of segments of the initial trajectory by predefined camera movement patterns

At the end of the step S2, a graphical user interface presents a list of all segment candidates to a replacement. They can be replaced manually or not. They can be all replaced or only a part of them depending on the director desire.

For instance, the part of the initial trajectory when the director staggers going forward with the camera at 90° on his left will be a candidate for a linear tracking shot with a -90° pan. The part of the initial trajectory when the director circles badly around a statue with the camera pointing just ahead will be a candidate for a circular tracking shot with a 0° pan.

### Step S4: manual trajectory editing with extension and/or modification of the trajectory

In this step, the director edits the post-processed trajectory (resulting from the previous steps) and views it in a 3D graphical editor like Maya or Blender. He can also turn around it if he wants.

In this step, the director has the possibility to modify different parameters of the post processed trajectory. Different modifications are given hereinafter as examples.

The director can modify the timing of each sample point of the trajectory, individually or by selecting a part of the trajectory. It could be also done globally so that the trajectory is followed by the drone at a constant speed. For example, in a gallery wherein a plurality of paintings are exhibited, the director can modify the duration of each segment corresponding to each painting capture, for instance, be steady or do a tracking shot of 3 seconds in front of each painting.

The director can also extend the trajectory by creating some additional sample points, helped by the position of existing points. An assistance is available to help concatenation of a new segment, or cutting an existing one and adding new points between both boundaries. This segment can be created and chosen directly in the collection of patterns. This extension can consist in adding a segment that can not be acquired by moving the pseudo camera (step S1). For example, it can be a segment wherein the camera goes out through the open window of a room of the castle and gets back indoor by the next open window.

The director can also replace a segment that has not been automatically replaced (step S3) by a pattern of the collection. He can also move a single point or several ones of the trajectory, change the orientation of the camera for a single point or for selected points. For example, the portion of the initial trajectory corresponding to the moment when the director goes upstairs is very shaky and may not have been automatically identified as a linear or a helix tracking shot during the step S2. So the director may edit this portion with the graphical user interface and apply to it one of this pattern to fix it appropriately.

At the end of this step, a final or target trajectory is obtained. This final trajectory can be transferred to the auto-pilot controller of the drone. A data conversion might be necessary depending on the data format of both systems (the trajectory editor and the drone controller). This final trajectory is the trajectory of the camera of the drone. So, if the camera is fixed on the drone, this final trajectory is the trajectory of the drone.

If the camera has at least one degree of freedom (position and/or orientation) with respect to the drone, the auto-pilot controller must be capable to control in combination the drone and the camera, the final trajectory provided to the auto-pilot controller being the trajectory resulting from the movement of the drone and the movement of the camera with respect to the drone.

Once the trajectory transfer is done, the director can turn on the camera embedded on the drone to start filming and then starts the flight, triggering the auto-pilot of the drone. The drone takes off and reaches the first point of the predefined trajectory (final trajectory) generated by the steps S1-S4. Then, the drone follows perfectly this trajectory and the camera acts as expected. During the flight, the director may have a live preview feedback of the video feed to monitor the shooting. At the end of the flight, the recorded movie should be available as expected.

The whole described method could be performed in a single software/hardware or with distinct software/hardware exchanging data with their own format (acquisition, movie trajectory adaptation and design, trajectory uploading to the drone).

Figure 2 is a schematic view of the global architecture of a trajectory generation system according to one non-limitative embodiment. The system comprises a first module 10 for tracking the trajectory of the pseudo-camera. This module can be an optical system comprising optical cameras and reflective markers, a kinect device, an inertial measurement unit (IMU) or an Ultra-High band system with anchors. The module 10 outputs a first trajectory which is an approximation of the target trajectory.

According to a variant, the system comprises an interface 110 for receiving information representative of the approximate trajectory. The information is for example received via a wire connection (e.g. USB or Ethernet) of via a wireless connection (e.g. Bluetooth, WiFi). According to this variant, the approximate trajectory may for example be acquired via a module external to the system.

This approximate trajectory is then post-processed by a post-processing unit 11 that implements the steps S2 and S3 of the method. The post-processing unit 11 is connected to a memory 12 storing the collections of predefined camera movements. It automatically detects trajectory segments that matches with predefined camera movements of the collection and replaces the detected trajectory segments by the corresponding predefined camera movements. The post-processing unit 11 may for example take the form of one or several processors, e.g. CPUs and/or GPUs.

A user interface unit 13 is connected to the post-processing unit 11. The user can thus through this UI unit provide additional amendments (step S4) to the trajectory. The post-processing unit outputs the final or target trajectory.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for generating a target trajectory of a camera embarked on a drone moving in an indoor or outdoor environment, **characterized in that** said method comprises:
- receiving (S1) information representative of an approximate trajectory of the target trajectory acquired by moving an object in said environment,
- identifying (S2), in said approximate trajectory, at least one trajectory segment corresponding substantially to at least one predefined camera movement pattern, and
- replacing (S3) said at least one trajectory segment by said at least one predefined camera movement pattern in order to get the target trajectory.

2. Method according to claim 1, wherein the predefined camera movement is part of a collection of predefined camera movements used in film making industry.

3. Method according to claim 1 or 2, wherein the identifying is automatic.

4. Method according to any one of claims 1 to 3, wherein the approximate trajectory comprises a plurality of sample points, each sample point being **characterized by** a 3D position, an orientation and a time stamp.

5. Method according to claim 4, wherein the movement of the object is captured by a tracking system arranged for tracking the 3D position and the orientation of the object when moved in said environment and for generating a 3D position, an orientation and a time stamp for each sample point of the approximate trajectory.

6. Method according to claim 4 or 5, wherein the method further comprises modifying (S4) the timestamp and/or the 3D position and/or the orientation of at least one sample point of the approximate trajectory or the target trajectory.

7. Method according to any one of claims 4 to 6, wherein the method further comprises adding and/or deleting at least one sample points to and/or from the approximate trajectory and/or target trajectory.

8. A system for generating a target trajectory of a camera embarked on a drone moving in an indoor or outdoor environment, **characterized in that** said system comprises:
- a interface (110) configured for receiving information representative of an approximate trajectory of the target trajectory acquired by moving an object in said environment, and
- a unit (11) configured for identifying, in said approximate trajectory, at least one trajectory segment corresponding substantially to at least one predefined camera movement pattern and for replacing said at least one trajectory segment by said at least one predefined camera movement pattern in order to get the target trajectory.

9. The system according to claim 8, wherein the predefined camera movement is part of a collection of predefined camera movements used in film making industry.

10. The system according to claim 8 or 9, wherein the identifying is automatic.

11. The system according to any one of claims 8 to 10, wherein the approximate trajectory comprises a plurality of sample points, each sample point being **characterized by** a 3D position, an orientation and a time stamp.

12. The system according to claim 11, wherein the unit (10) for capturing the movement of said object comprises a tracking system arranged for tracking the 3D position and the orientation of the object when moved in said environment and for generating a 3D position, an orientation and a time stamp for each sample point of the approximate trajectory.

13. The system according to claim 11 or 12, wherein the system further comprises a unit configured for modifying the timestamp and/or the 3D position and/or the orientation of at least one sample point of the approximate trajectory or the target trajectory.

14. The system according to any one of claims 11 to 13, wherein the system further comprises a unit configured for adding and/or deleting at least one sample points to and/or from the approximate trajectory and/or target trajectory.
